# EUROPÄISCHE PATENTANMELDUNG

(11) **EP 2 267 820 A2**
(43) Veröffentlichungstag der Anmeldung: **29.12.2010**
(21) Anmeldenummer: 09012982.6
(22) Anmeldetag: 14.10.2009
(51) Int. Cl.: H01M 2/16, H01M 10/50, H01M 10/0587, H01M 2/02, H01M 2/22

(54) **Elektrodenwickel**

(30) Priorität: 26.05.2009 DE 102009022678
(71) Anmelder: Li-Tec Battery GmbH, 01917 Kamenz (DE)
(72) Erfinder: Gutsch, Andreas Dr., 59348 Lüdinghausen (DE); Schäfer, Tim, 99762 Niedersachswerfen (DE)
(74) Vertreter: Schlotter, Alexander Carolus Paul

(57) **Zusammenfassung**

Elektrodenwickel (3) von im wesentlichen zylindrischer Gestalt, welcher wenigstens aufweist:
eine anodische Elektrode (5),
eine kathodische Elektrode (6), und
einen Separator (4), welcher wenigstens teilweise zwischen diesen Elektroden (5, 6) angeordnet ist,
**dadurch gekennzeichnet,**
**dass** der Separator (4) aus einem Material gefertigt ist, welches wenigstens einen Bestandteil aus einem keramischen Werkstoff aufweist.

## Beschreibung

Die Erfindung betrifft einen Elektrodenwickel gemäß dem Oberbegriff des Anspruchs 1. Die Erfindung wird im Zusammenhang mit einer Lithium-lonen-Batterie zur Versorgung eines Kraftfahrzeugs beschrieben. Es wird darauf hingewiesen, dass die Erfindung auch unabhängig von der Chemie, der Bauart des Elektrodenwickels oder der Art des versorgten Antriebs Anwendung finden kann.

Aus dem Stand der Technik sind Elektrodenwickel bzw. galvanische Zellen bekannt, welche im Fall einer mechanischen Beschädigung oder bei Übertemperatur gespeicherte Energie möglicherweise unkontrolliert freisetzen. Dadurch kann die Umgebung gefährdet werden.

Die Aufgabe der Erfindung ist es, einen Elektrodenwickel bzw. eine galvanische Zelle mit einem Elektrodenwickel sicherer zu gestalten.

Diese Aufgabe wird gelöst durch einen Elektrodenwickel mit den Merkmalen des Anspruchs 1. Bevorzugte und vorteilhafte Weiterbildungen sind Gegenstand der abhängigen Ansprüche. Eine bevorzugte Verwendung einer galvanischen Zelle mit wenigstens einem erfindungsgemäßen Elektrodenstapel ist Gegenstand eines nebengeordneten Anspruchs.

Zur Lösung der Aufgabe wird ein Elektrodenwickel von im wesentlichen zylindrischer Gestalt vorgeschlagen. Der Elektrodenwickel weist wenigstens eine anodische Elektrode, eine kathodische Elektrode, und einen Separator auf. Der Separator ist wenigstens teilweise zwischen diesen Elektroden angeordnet. Der Elektrodenwickel ist **dadurch gekennzeichnet, dass** der Separator aus einem Material gefertigt ist, welches wenigstens einen Bestandteil aus einem keramischen Werkstoff aufweist.

Im Sinne der Erfindung ist unter einem Elektrodenwickel eine Einrichtung zu verstehen, welche auch der Speicherung chemischer Energie und zur Abgabe elektrischer Energie dient, insbesondere als Baugruppe einer galvanischen Zelle. Vor der Abgabe elektrischer Energie wird gespeicherte chemische Energie in elektrische Energie gewandelt. Während des Ladens wird die dem Elektrodenwickel bzw. der galvanischen Zelle zugeführte elektrische Energie in chemische Energie gewandelt und abgespeichert. Dazu weist der Elektrodenwickel mehrere Schichten auf, wenigstens eine Anodenschicht, eine Kathodenschicht und eine Separatorschicht. Die Schichten sind übereinander gelegt bzw. gestapelt, wobei die Separatorschicht wenigstens teilweise zwischen einer Anodenschicht und einer Kathodenschicht angeordnet ist. Die Schichten des Elektrodenwickels sind aufgewickelt, insbesondere um einen Kern. Ausgehend von seiner Grundfläche bzw. Stirnfläche, erstreckt sich der Elektrodenwickel senkrecht entlang seiner Längsachse. Vorzugsweise ist die Grundfläche des Elektrodenwickels im Wesentlichen kreisförmig oder mehreckig, insbesondere sechseckig. Vorzugsweise die Ecken der Grundfläche abgerundet.

Im Sinne der Erfindung ist unter einer galvanischen Zelle eine Vorrichtung zu verstehen, welche auch zur Speicherung chemischer Energie und zur Abgabe elektrischer Energie dient. Dazu verfügt die erfindungsgemäße galvanische Zelle wenigstens über zwei Elektroden und einen Elektrolyt. Insbesondere kann die galvanische Zelle ausgestaltet sein, elektrische Energie beim Laden aufzunehmen, in chemische Energie zu wandeln und abzuspeichern. Man spricht dann auch von einer Sekundärzelle oder einem Akkumulator.

Im Sinne der Erfindung ist unter einer Anodenschicht bzw. einer Anode eine Einrichtung zu verstehen, welche beim Laden Elektronen und/oder positiv geladene Ionen aufnimmt, insbesondere auf Zwischengitterplätzen einlagert. Vorzugsweise ist die Anode dünnwandig ausgebildet, besonders bevorzugt beträgt die Dicke der Anode weniger als 5% ihres Außenumfangs. Vorzugsweise weist die Anode eine Metallfolie oder eine metallische Netzstruktur auf. Vorzugsweise ist die Anode im Wesentlichen rechteckig ausgebildet.

Im Sinne der Erfindung ist unter einer Kathodenschicht bzw. einer Kathode eine Einrichtung zu verstehen, welche beim Entladen bzw. während der Abgabe elektrischer Energie auch Elektronen und/oder positiv geladene Ionen aufnimmt. Vorzugsweise ist die Kathode dünnwandig ausgebildet, besonders bevorzugt beträgt die Dicke der Kathode weniger als 5% ihres Außenumfangs. Vorzugsweise weist die Kathode eine Metallfolie oder eine metallische Netzstruktur auf. Vorzugsweise entspricht die Gestalt einer Kathode im Wesentlichen der Gestalt einer Anode des Elektrodenwickels. Eine Kathode ist auch zur elektrochemischen Wechselwirkung mit einer Anode bzw. mit dem Elektrolyt vorgesehen.

Vorzugsweise weist wenigstens eine Elektrode des Elektrodenwickels, besonders bevorzugt wenigstens eine Kathode, eine Verbindung mit der Formel LiMPO₄ auf, wobei M wenigstens ein Übergangsmetallkation der ersten Reihe des Periodensystems der Elemente ist. Das Übergangsmetallkation ist vorzugsweise aus der Gruppe bestehend aus Mn, Fe, Ni und Ti oder einer Kombination dieser Elemente gewählt. Die Verbindung weist vorzugsweise eine Olivinstruktur auf, vorzugsweise übergeordnetes Olivin.

In einer weiteren Ausführungsform weist vorzugsweise wenigstens eine Elektrode des Elektrodenwickels, besonders bevorzugt wenigstens eine Kathode, ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, auf.Im Sinne der Erfindung ist unter einem Separator auch eine elektrisch isolierende Einrichtung zu verstehen, welche eine Anode von einer Kathode trennt und beabstandet. Vorzugsweise ist eine Separatorschicht auf eine Anode und/oder eine Kathode aufgetragen. Die Separatorschicht bzw. der Separator nimmt auch einen Elektrolyt wenigstens teilweise auf, wobei der Elektrolyt vorzugsweise Lithium-lonen enthält. Der Elektrolyt ist auch mit benachbarten Schichten des Elektrodenstapels elektrochemisch wirkverbunden. Vorzugsweise entspricht die Gestalt eines Separators im Wesentlichen der Gestalt einer Anode des Elektrodenwickels.

Der Separator (im folgenden "keramischer Separator") ist erfindungsgemäß aus einem Material gefertigt, welches wenigstens einen Bestandteil aus einem keramischen Werkstoff aufweist. Dieser keramische Werkstoff weist eine für die Funktion des Elektrodenwickels ausreichende Porosität auf, ist jedoch im Vergleich zu Polyolefin-Separatoren wesentlich temperaturbeständiger und schrumpft bei höheren Temperaturen weniger. Ein keramischer Separator weist zudem vorteilhaft eine hohe mechanische Festigkeit auf. Als keramisches Material kommt bevorzugt auch Al₂O₃ (Aluminiumoxid) und/oder SiO₂ (Siliziumoxid) zum Einsatz. Je nach erforderlicher Batterieleistung können keramische Separatoren mit unterschiedlicher Dicke und/oder Porosität bereitgestellt werden.

Als Folge hoher Ströme während des Betriebs eines Elektrodenwickels zur Versorgung eines Kraftfahrzeugantriebs kommt es mitunter zu einer starken Erwärmung des Elektrodenwickels. Ein aus einem polyolefinen Material gebildeter Separator kann bei übermäßiger Erwärmung stark schrumpfen, z.B. infolge eines Kurzschlusses oder Überladung, wodurch der Elektrodenwickel wenigstens unbrauchbar wird. Bei einem starken Schrumpfeffekt kommt es ferner zu einem direkten Kontakt zwischen der anodischen Elektrode und der kathodischen Elektrode und damit zu einer noch stärkeren Überhitzung des Elektrodenwickels, was auch einen Brand auslösen kann. Bei Ausbildung des Separators aus einem keramischen Material ist insbesondere dessen Temperaturbeständigkeit erhöht bzw. das temperaturbedingte Schrumpfen des Separators verringert. So wird die elektrische Trennung von Elektroden durch einen keramischen Separator insbesondere bei höheren Temperaturen weitgehend erhalten. Die Gefahr einer unkontrollierten Entladung des Elektrodenwickels wird vorteilhaft verringert und die zugrunde liegende Aufgabe gelöst.

Vorteilhaft ist der keramische Separator aus einem biegsamen keramischen Kompositmaterial gebildet. Ein Kompositmaterial ist aus verschiedenen, miteinander fest verbundenen Materialien hergestellt. Ein solches Material kann auch als Verbundmaterial bezeichnet werden. Insbesondere ist vorgesehen, dass dieses Kompositmaterial aus keramischen Materialien und aus polymeren Materialien gebildet ist. Es ist bekannt, ein Vlies aus PET mit einer keramischen Imprägnierung bzw. Auflage zu versehen. Solche Kompositmaterialien können Temperaturen von über 200° Celsius (teilweise bis 700° Celsius) standhalten. Vorzugsweise ist der keramische Separator einseitig mit einer ionischen Flüssigkeit benetzt. Die ionische Flüssigkeit erhöht insbesondere die Biegsamkeit des keramischen Separators. Bevorzugt ist der keramische Separator zweiseitig mit einer ionischen Flüssigkeit benetzt. Hierzu sind besonders ionische Flüssigkeiten geeignet. Diese sind so eingestellt, dass sie am keramischen Separator anhaften und diesen dadurch gut benetzen können, insbesondere im Hinblick auf die Herstellung.

Vorteilhaft erstreckt sich eine Separatorschicht bzw. ein Separator wenigstens bereichsweise über eine Begrenzungskante wenigstens einer insbesondere benachbarten Elektrode. Besonders bevorzugt erstreckt sich eine Separatorschicht bzw. ein Separator über sämtliche Begrenzungskanten insbesondere benachbarter Elektroden hinaus. So werden auch elektrische Ströme zwischen den Kanten von Elektroden des Elektrodenwickels verringert.

Vorteilhaft umfasst der Elektrodenwickel wenigstens zwei Elektrodenpaare, d.h. wenigstens zwei Anoden (a) und wenigstens zwei Kathoden (k). Dabei sind Elektroden unterschiedlicher Polarität mittels wenigstens eines Separators (s) getrennt. Insbesondere sind die Schichten des Elektrodenwickels in der Folge a₁ - s - k₁ - s - a₂ - s - k₂ angeordnet. Diese Schichten sind zu einem Elektrodenwickel aufgewickelt. Vorzugsweise sind in diesem Elektrodenwickel mehrere Elektrodenschichten miteinander, insbesondere elektrisch leitend verbunden. Mit elektrisch leitender Verbindung von Elektroden gleicher Polarität sind die Elektrodenpaare parallel geschaltet. Mit elektrisch leitender Verbindung von Elektroden, insbesondere unterschiedlicher Polarität, sind die Elektrodenpaare bevorzugt in Reihe geschaltet. Vorteilhaft wird insbesondere die elektrische Spannung des Elektrodenwickels erhöht.

Vorteilhaft ist an wenigstens einer Begrenzungsfläche des Elektrodenwickels wenigstens ein Kontaktelement angeordnet, welches mit einer Elektrode verbunden ist. Im Sinne der Erfindung ist unter einer Begrenzungsfläche eines Elektrodenwickels eine seiner Mantelflächen zu verstehen. Auch eine Stirnfläche fällt im Sinne der Erfindung unter den Begriff der "Begrenzungsfläche". Im Sinne der Erfindung ist unter einem Kontaktelement eine leitfähige Einrichtung zu verstehen, welche eine Elektrode des Elektrodenwickels insbesondere elektrisch kontaktiert und insbesondere aus den Elektrodenwickel herausragt bzw. von diesem absteht. Vorzugsweise sind wenigstens zwei Kontaktelemente an wenigstens je einer Begrenzungsfläche angeordnet. Vorzugsweise sind jeweils wenigstens ein Kontaktelement an verschiedenen Begrenzungsflächen des Elektrodenwickels angeordnet. Vorzugsweise sind wenigstens zwei Kontaktelemente an derselben Begrenzungsfläche des Elektrodenwickels angeordnet, insbesondere an einer Stirnfläche. Vorzugsweise sind einer Elektrodenschicht des Elektrodenwickels mehrere Kontaktelemente zugeordnet, insbesondere mit regelmäßigen Abstand. So wird vorteilhaft die Stromdichte je Kontaktelement gesenkt. Vorzugsweise ist ein Kontaktelement als elektrisch leitendes, flächiges Element auf einer Begrenzungsfläche des Elektrodenwickels ausgebildet. Vorzugsweise ist ein Kontaktelement als Ableiterfähnchen ausgebildet. Vorzugsweise sind wenigstens zwei Kontaktelemente von verschiedenen Elektrodenschichten miteinander elektrisch leitend verbunden, insbesondere zur Reihenschaltung der Elektrodenschichten.

Erfindungsgemäß wird vorzugsweise ein Separator verwendet, welcher aus einem stoffdurchlässigen Träger besteht, vorzugsweise teilweise stoffdurchlässig, also im Wesentlichen durchlässig in Bezug auf zumindest ein Material und im Wesentlichen undurchlässig in Bezug auf zumindest ein anderes Material. Der Träger ist auf mindestens einer Seite mit einem anorganischen Material beschichtet. Als stoffdurchlässiger Träger wird vorzugsweise ein organisches Material verwendet, welches vorzugsweise als nicht verwebtes Vlies ausgestaltet ist. Das organische Material, vorzugsweise ein Polymer und besonders bevorzugt Polyethylenterephthalat (PET), ist mit einem anorganischen ionenleitenden Material beschichtet, welches vorzugsweise in einem Temperaturbereich von -40° C bis 200° C ionenleitend ist. Das anorganische, ionenleitende Material umfasst bevorzugt wenigstens eine Verbindung aus der Gruppe der Oxide, Phosphate, Sulfate, Titanate, Silikate, Aluminosolikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf. Ein solcher Separator wird beispielsweise unter dem Handelsnamen "Separion" von der Evonik AG in Deutschland vertrieben.

Vorteilhaft weist eine galvanische Zelle wenigstens einen Elektrodenwickel und eine Einhausung auf. Im Sinne der Erfindung ist unter einer Einhausung eine Einrichtung zu verstehen, welche insbesondere den wenigstens einen Elektrodenwickel von der Umgebung trennt. Dazu umgibt die Einhausung den wenigstens einen Elektrodenwickel im Wesentlichen vollständig mit einer Wandung. Vorzugsweise ist die Einhausung wenigstens bereichsweise an die Gestalt eines Elektrodenwickels angepasst. Besonders bevorzugt ist die Einhausung überwiegend an die Gestalt eines Elektrodenwickels angepasst. Bevorzugt ist die Einhausung mit dem Elektrodenwickel wenigstens bereichsweise stoffschlüssig verbunden. Bevorzugt ist die Einhausung als Verbundfolie ausgebildet. Vorzugsweise weist die Einhausung eine Metallfolie auf. Vorzugsweise liegt die Einhausung überwiegend am Elektrodenwickel an. Vorzugsweise umschließt die Einhausung den Elektrodenwickel wenigstens teilweise formschlüssig, stützt den Elektrodenwickel und hält dessen Schichten zusammen. Vorzugsweise ist die Einhausung vorgespannt und übt eine Kraft auf den Elektrodenwickel aus. Auf diese Weise zwängt die Einhausung die Schichten des Elektrodenwickels aneinander und verringert vorteilhaft etwaige Verlagerungen einer Schicht des Elektrodenwickels in Bezug auf dessen übrigen Schichten. Vorzugsweise ist die Einhausung als dünnwandiges Metallblech ausgebildet.

Vorteilhaft weist eine galvanische Zelle wenigstens zwei Elektrodenwickel und eine Einhausung auf. Vorzugsweise sind die wenigstens zwei Elektrodenwickel miteinander, insbesondere elektrisch, verbunden, insbesondere in Reihe. Vorzugsweise sind die wenigstens zwei Elektrodenwickel zueinander derart angeordnet, dass deren Längsachsen im Wesentlichen parallel verlaufen und besonders bevorzugt zusammenfallen. Vorzugsweise berühren sich zwei Elektrodenwickel an je einer Stirnfläche. Vorzugsweise sind wenigstens zwei Elektrodenwickel von einer gemeinsamen Einhausung wenigstens teilweise umgeben. Dabei ist die gemeinsame Einhausung ausgebildet, wie zuvor beschrieben.

Vorteilhaft ist der Innenseite der Einhausung wenigstens eine Stromleiteinrichtung zugeordnet. Die Stromleiteinrichtung dient auch der elektrischen Wirkverbindung zweier Elektrodenwickel, insbesondere zur Reihenschaltung. Vorzugsweise ist die wenigstens eine Stromleiteinrichtung zur Kontaktierung wenigstens je eines Kontaktelements eines Elektrodenwickels vorgesehen, besonders bevorzugt zur Kontaktierung von je wenigstens einem Kontaktelement von wenigstens zwei Elektrodenwickeln. Vorzugsweise weist die Innenseite der Einhausung gleichzeitig mehrere voneinander getrennte Stromleiteinrichtungen auf. Vorzugsweise ist die wenigstens eine Stromleiteinrichtung als Leiterbahn oder Stromleitfläche ausgebildet, welche insbesondere auf die Innenseite der Einhausung aufgebracht ist. Vorzugsweise ist die Stromleiteinrichtung auf die Innenseite der Einhausung aufgedampft. Vorzugsweise ist die wenigstens eine Stromleiteinrichtung als leitfähiges Plättchen ausgebildet, welches bei der Herstellung der Einhausung eingelegt wird. Vorzugsweise ist die wenigstens eine Stromleiteinrichtung so ausgebildet, dass sie bei vorbestimmten Bedingungen versagt, insbesondere oberhalb einer vorgegebenen Temperatur. Vorzugsweise weist die wenigstens eine Stromleiteinrichtung eine Dünnstelle auf. Vorzugsweise ist die wenigstens eine Stromleiteinrichtung mit einem Polkontakt der Einhausung insbesondere elektrisch leitend verbunden. Vorzugsweise reicht wenigstens eine Stromleiteinrichtung durch die Einhausung.

Vorteilhaft ist wenigstens ein Kontaktelement eines Elektrodenwickels mit einem Bereich der Einhausung, insbesondere elektrisch leitend verbunden. Vorzugsweise ist wenigstens ein Kontaktelement eines Elektrodenwickels mit der Wandung der Einhausung bereichsweise, insbesondere elektrisch leitend verbunden. Vorzugsweise erstreckt sich dieser elektrisch leitende Bereich der Wandung wenigstens in Richtung eines Polkontakts, eines weiteren Elektrodenwickels und/oder zur Außenseite der Wandung. Dieser elektrisch leitende Bereich der Wandung der Einhausung dient insbesondere der elektrischen Kontaktierung wenigstens eines Elektrodenwickels. Mittels dieses elektrisch leitenden Bereichs der Wandung sind insbesondere zwei Elektrodenwickel miteinander elektrisch leitend verbunden. Vorzugsweise dient dieser elektrisch leitende Bereich der Wandung der Einhausung der elektrischen Verbindung eines Elektrodenwickels mit einem Polkontakt und/oder der Umgebung. Vorteilhaft kann auf Verkabelungen innerhalb der galvanischen Zelle verzichtet werden.

Vorteilhaft ist wenigstens ein Kontaktelement eines Elektrodenwickels durch die Einhausung geführt. Dieses herausgeführte Kontaktelement dient insbesondere der elektrischen Kontaktierung des Elektrodenwickels. Vorzugsweise ist das wenigstens eine Kontaktelement gasdicht durch die Einhausung, insbesondere deren Wandung, geführt. Vorzugsweise sind wenigstens zwei Kontaktelemente durch die Einhausung geführt.

Vorteilhaft weist die Einhausung wenigstens einen ersten Verbindungsbereich auf. Dieser erste Verbindungsbereich dient insbesondere der Verbindung der Einhausung mit wenigstens einem weiteren Körper, insbesondere mit einer anderen Einhausung, einem Bereich des Batteriegehäuses und/oder mit einer Wärmetauscheinrichtung. Vorzugsweise weist die Einhausung mehrere erste Verbindungsbereiche auf. Vorzugsweise ist die Verbindung mit wenigstens einem weiteren Körper stoffschlüssig und/oder kraftschlüssig ausgebildet.

Vorteilhaft weist die Einhausung wenigstens einen Wärmeübergangsbereich auf. Vorzugsweise ist der Wärmeübergangsbereich der Wandung der Einhausung zugeordnet. Dieser Wärmeübergangsbereich dient insbesondere der Wärmeübertragung in einen Elektrodenwickel hinein oder aus diesem heraus. Dabei ist der Elektrodenstapel wenigstens bereichsweise mit der Einhausung wärmeleitend verbunden. Der Wärmeübergangsbereich erstreckt sich vorzugsweise über einen überwiegenden Teil der Wandung der Einhausung. Vorzugsweise ist der Wärmeübergangsbereich von einem ersten Temperiermittel angeströmt und/oder ist wärmeleitend mit einer Wärmetauscheinrichtung verbunden. Vorzugsweise fallen ein erster Verbindungsbereich und ein Wärmeübergangsbereich wenigstens teilweise zusammen.

Vorteilhaft weist die Einhausung wenigstens zwei Formteile auf. Diese sind vorgesehen, miteinander verbunden zu werden. Die Verbindung wenigstens zweier Formteile untereinander erfolgt vorzugsweise kraftschlüssig und/oder stoffschlüssig. Abhängig von den Werkstoffen der verschiedenen Formteile werden diese insbesondere durch Kleben oder ein Schweißverfahren miteinander verbunden. Insbesondere findet das Ultraschallschweißen zur Verbindung eines metallischen Formteils mit einem thermoplastischen Formteil Anwendung. Dabei ist insbesondere eine Vorbehandlung bzw. Aktivierung wenigstens einer der Oberflächen eines beteiligten Formteils dienlich. Eine insbesondere kraft- oder stoffschlüssige Verbindung verbindet die wenigstens zwei Formteile derart, dass vorzugsweise eine umlaufende streifenförmige Verbindung den Raum zwischen den Formteilen gegenüber der Umgebung abdichtet. Vorzugsweise werden wenigstens zwei Formteile in einem zweiten Verbindungsbereich insbesondere stoffschlüssig miteinander verbunden. Dieser zweite Verbindungsbereich verläuft vorzugsweise entlang eines Randbereichs eines beteiligten Formteils. Der zweite Verbindungsbereich ist dabei streifenförmig ausgebildet. Es ist nicht erforderlich, dass der zweite Verbindungsbereich gänzlich entlang der begrenzenden Kanten des Formteils umläuft. Vor der Verbindung der beteiligten Formteile können weitere Einlegeteile so angeordnet werden, dass diese ebenfalls mit den Formteilen kraft- oder stoffschlüssig verbunden werden. Vorzugsweise ist wenigstens eines Kontaktelement von Elektrodenwickels so angeordnet, dass dieses sich teilweise aus der Einhausung erstreckt. Vorzugsweise ist die Einhausung auch in den Bereichen eines durchgeführten Kontaktelement gasdicht gegenüber der Umgebung ausgebildet.

Vorzugsweise weist wenigstens ein Formteil der Einhausung einen Wärmeübergangsbereich auf. Vorzugsweise ist der Wärmeübergangsbereich gleichzeitig als erster Verbindungsbereich ausgebildet. Der Wärmeübergangsbereich kann gleichzeitig zur Befestigung der galvanischen Zelle an eine Wärmetauscheinrichtung dienen, insbesondere durch Schrauben, Nieten, Kleben oder Schweißen. Vorzugsweise ist wenigstens ein Formteil der Einhausung biegesteif ausgeführt. Dieses Formteil gibt insbesondere dem Elektrodenwickel Halt, bewahrt den Elektrodenwickel vor mechanischer Beschädigung und/oder dient der mechanischen Verbindung der galvanischen Zelle mit einer Aufnahmevorrichtung. Vorzugsweise ist ein biegesteifes Formteil als Metallplatte oder Metallblech ausgebildet. Das Formteil ist vorzugsweise durch Sicken, hochgestellte Bereiche und/oder Rippen versteift. Vorzugsweise ist wenigstens ein Formteil der Einhausung dünnwandig ausgeführt. Vorzugsweise ist die Wandstärke eines dünnwandigen Formteils an eine mechanische, elektrische oder thermische Beanspruchung angepasst. Dabei ist die Wandstärke vorzugsweise nicht gleichförmig. Ein Bereich eines dünnwandigen Formteils mit erhöhter Wandstärke wirkt insbesondere als Wärmesenke oder Wärmereservoir und trägt insbesondere dazu bei, dass Wärmeenergie aus dem Elektrodenwickel abgeführt oder in diesen transportiert wird. Auch spart die dünnwandige Ausbildung eines Formteils vorteilhaft Gewicht und Platz. Vorzugsweise ist wenigstens ein Formteil als Folie, besonders bevorzugt als Verbundfolie, ausgebildet. Als Werkstoffe für die Verbundfolie kommen insbesondere Metalle und/oder Kunststoffe in Frage. Vorzugsweise weist wenigstens ein Formteil der Einhausung wenigstens bereichsweise eine Beschichtung auf. Diese Beschichtung dient auch zur Anpassung an Beanspruchungen, denen das Formteil ausgesetzt ist. Insbesondere dient die Beschichtung zur elektrischen Isolation, zum Schutz des Formteils gegen die Chemikalien der galvanischen Zelle, zur Haftverbesserung für eine Klebeverbindung, zur Verbesserung der Wärmeleitfähigkeit und/oder zum Schutz gegen insbesondere schädigende Einwirkungen aus der Umgebung. Eine Beschichtung bewirkt insbesondere eine chemische Aktivierung der Oberfläche des Formteils. Eine Beschichtung weist vorzugsweise wenigstens einen Werkstoff auf, der von den Werkstoffen des Formteils abweicht. Das wenigstens eine Formteil weist vorzugsweise auch mehrere verschiedene Beschichtungen auf, welche insbesondere an unterschiedlichen Bereichen des Formteils angeordnet sind. Wenn ein Formteil in elektrischem Kontakt mit dem Elektrodenwickel steht, dann ist ein Stromableiter gegenüber diesem Formteil bevorzugt elektrisch isoliert.

Vorteilhaft weist wenigstens ein Formteil der Einhausung eine Ausnehmung auf, insbesondere eine Schale. Mit dieser Gestaltung gewinnt das Formteil insbesondere ein erhöhtes Flächenträgheitsmoment bzw. Biegesteifigkeit. Vorzugsweise nimmt diese Ausnehmung den Elektrodenwickel wenigstens teilweise auf. Das dient insbesondere dem Schutz des Elektrodenwickels. Die Wandstärke eines Formteils mit Ausnehmung ist vorzugsweise an die Beanspruchung angepasst. Mehrere Formteile der Einhausung weisen je wenigstens eine Ausnehmung auf, welche gemeinsam einen Raum zur Aufnahme des Elektrodenwickels bilden. Vorzugsweise ist ein Formteil als tiefgezogenes oder kaltfließgepresstes Metallblech ausgebildet. Vorzugsweise ist ein Formteil als tiefgezogene Kunststoffplatte oder Kunststofffolie ausgebildet. Vorzugsweise ist wenigstens ein Formteil schalenförmig ausgebildet. Dabei ist die Krümmung des schalenförmigen Formteils an den Radius des Elektrodenwickels angepasst. Bei einer mehreckigen Grundfläche des Elektrodenwickels erstreckt sich wenigstens ein Formteil mehrflächig entlang der Längsachse des Elektrodenwickels. Vorzugsweise ist wenigstens ein Formteil als Deckel ausgebildet.

Vorteilhaft weist wenigstens ein Formteil einen ersten Verbindungsbereich auf. Der erste Verbindungsbereich dient insbesondere der Befestigung der galvanischen Zelle, insbesondere in einem Gehäuse, in einem Rahmen oder auf einer Grundplatte. Vorzugsweise ist ein erster Verbindungsbereich derart ausgebildet, dass die Verbindung des betreffenden Formteils mit einem weiteren Körper nur in vorbestimmter Weise erfolgen kann. Beispielsweise weist ein erster Verbindungsbereich eine geometrische Gestalt auf, welche einem Bereich eines weiteren Körpers entspricht. Vorzugsweise ist eine Verbindung zwischen dem Formteil und dem weiteren Körper nur in vorbestimmter Weise möglich, mittels einer Anordnung von Formelementen, insbesondere Löcher und Zapfen. Vorzugsweise gestattet die Anordnung von Durchgangslöchern oder Gewinden eine Verbindung nur in vorbestimmter Weise. Vorzugsweise ist ein erster Verbindungsbereich räumlich getrennt von einem zweiten Verbindungsbereich. Wenigstens ein Formteil der Einhausung weist vorzugsweise mehrere getrennte erste Verbindungsbereiche auf. Die Verbindung des Formteils mit einem anderen Körper erfolgt insbesondere mittels Nieten, Schrauben, Schweißen oder Kleben. Vorzugsweise fallen ein erster Verbindungsbereich eines Formteils und ein Wärmeübergangsbereich desselben Formteils zusammen. In diesen Bereichen ist das Formteil insbesondere mit einer Wärmetauscheinrichtung, einem Rahmen oder mit einer Grundplatte des Batteriegehäuses verbunden.

Vorteilhaft weist eine Batterie wenigstens zwei galvanische Zellen auf, welche vorzugsweise miteinander elektrisch verschaltet sind, insbesondere in einer Reihenschaltung. Der Batterie ist vorzugsweise wenigstens eine Wärmetauscheinrichtung zugeordnet, welche insbesondere mit wenigstens einer der wenigstens zwei galvanischen Zellen wärmeleitend verbunden ist. Die Wärmetauscheinrichtung ist vorgesehen, bei vorgegebenen Bedingungen Wärmeenergie mit wenigstens einer der wenigstens zwei galvanischen Zellen auszutauschen. Diese vorgegebenen Bedingungen sind insbesondere erfüllt wenn die Temperatur eines Elektrodenwickels bzw. einer galvanischen Zelle eine Grenztemperatur über- bzw. unterschreitet. Insbesondere wenn sich die Temperatur eines Elektrodenwickels bzw. einer galvanischen Zelle einer Minimaltemperatur nähert oder diese unterschreitet, führt die Wärmetauscheinrichtung diesem Elektrodenwickel bzw. dieser galvanischen Zelle Wärmeenergie zu. Insbesondere wenn sich die Temperatur eines Elektrodenwickels bzw. einer galvanischen Zelle einer Maximaltemperatur nähert oder diese überschreitet, so führt die Wärmetauscheinrichtung Wärmeenergie aus diesem Elektrodenwickel bzw. aus dieser galvanischen Zelle ab. Dabei ist eine Grenztemperatur in Abhängigkeit von den zulässigen Betriebstemperaturen eines Elektrodenwickels gewählt, insbesondere unter Berücksichtigung der Wärmekapazität der Einhausung und/oder dem Ort der Temperaturmessung. Vorzugsweise weist die Batterie wenigstens eine Messeinrichtung auf, welche vorgesehen ist, insbesondere die Temperatur wenigstens eines Elektrodenstapels bzw. wenigstens einer galvanischen Zelle zu erfassen. Vorzugsweise weist die Messeinrichtung mehrere Messfühler auf, welche vorgesehen sind, insbesondere die Temperatur mehrerer Elektrodenstapel bzw. mehrerer galvanischer Zellen zu erfassen. Die Temperatur der Wärmetauscheinrichtung wird bevorzugt in Abhängigkeit von der Temperatur des Elektrodenwickels einer galvanischen Zelle gewählt. Ein vorbestimmtes Temperaturgefälle verursacht einen Wärmestrom in diesen Elektrodenwickel hinein bzw. aus diesem Elektrodenwickel hinaus. Dabei tauscht die Wärmetauscheinrichtung mit einem Elektrodenwickel Wärmeenergie über wenigstens einen Bereich der Einhausung bzw. deren Wärmeübergangsbereich aus, welcher mit der Wärmetauscheinrichtung in Berührung steht. Auch sind die vorhandenen galvanischen Zellen insbesondere kraft- oder stoffschlüssig über einen ersten Verbindungsbereich der Einhausung mit der wenigstens einen Wärmetauscheinrichtung verbunden. Vorteilhaft weist die Wärmetauscheinrichtung wenigstens einen ersten Kanal, insbesondere zur Einstellung einer vorgegebenen Temperatur auf. Vorzugsweise ist dieser Kanal mit einem zweiten Temperiermittel gefüllt. Besonders bevorzugt durchströmt ein zweites Temperiermittel diesen wenigstens einen Kanal. Dabei führt das strömende zweite Temperiermittel der Wärmetauscheinrichtung Wärmeenergie zu oder führt Wärmeenergie ab. Die wenigstens eine Wärmetauscheinrichtung ist vorzugsweise mit einem Wärmetauscher wirkverbunden. Der Wärmetauscher führt Wärmeenergie aus dieser Wärmetauscheinrichtung ab oder führt dieser Wärmetauscheinrichtung Wärmeenergie zu, insbesondere mittels eines zweiten Temperiermittels. Der Wärmetauscher bzw. das Temperiermittel wechselwirken insbesondere mit der Klimaanlage eines Kraftfahrzeugs. Der Wärmetauscher weist vorzugsweise eine elektrische Heizeinrichtung auf.

Vorzugsweise ist die Wärmetauscheinrichtung als Aufnahmeeinrichtung, insbesondere als Grundplatte bzw. Rahmen, für die wenigstens zwei galvanischen Zellen der Batterie ausgebildet.

Vorteilhaft weisen die Längsachsen der wenigstens zwei galvanischen Zellen voneinander einen vorbestimmten Abstand auf. Vorzugsweise sind die Längsachsen zueinander parallel. Vorzugsweise ist der Abstand der Längsachsen zueinander so bemessen, dass sich die Einhausungen der wenigstens zwei galvanischen Zellen berühren. Vorzugsweise ist der Abstand der Längsachsen zweier benachbarter galvanischer Zellen so bemessen, dass diese eine Kraft auf eine dazwischen liegende Wärmetauscheinrichtung ausüben. Diese Kraft dient insbesondere der Verbesserung des thermischen Kontakts wenigstens einer galvanischen Zelle mit einer Wärmetauscheinrichtung. Falls die Batterie wenigstens drei galvanische Zellen aufweist, sind deren Längsachsen vorzugsweise zueinander parallel angeordnet. Die Abstände dieser Längsachsen sind durch drei vorgegebene Abstandsvektoren bestimmt. Vorzugsweise liegen diese Abstandsvektoren in einer gemeinsamen Ebene. Vorzugsweise sind die Beträge der drei Abstandsvektoren gleich. Bei dieser Anordnung der galvanischen Zellen ist vorzugsweise eine Wärmetauscheinrichtung in den Raum zwischen den drei galvanischen Zellen eingesetzt. Die Abstände der Längsachsen der galvanischen Zellen sind so bemessen, dass die galvanischen Zellen eine Kraft auf die Wärmetauscheinrichtung ausüben. Vorzugsweise ist die Anordnung der galvanischen Zellen auf Grundlage eines Quadrats aufgebaut. Dabei bilden die Längsachsen von vier galvanischen Zellen die Ecken dieses Quadrats. Während die Raumausnutzung im Vergleich zu einer dreieckigen Einheitszelle sinkt, ist die Wärmetauscheinrichtung vorzugsweise größer und/oder leistungsfähiger ausgebildet. Vorzugsweise sind die galvanischen Zellen prismatisch ausgebildet, wobei die Grundfläche, insbesondere der Einhausung, als ein regelmäßiges Sechseck gestaltet ist. Bei dieser Ausbildung der galvanischen Zellen wird die Wärmetauscheinrichtung bevorzugt als wenigstens einmal gekanntetes Blech ausgebildet. Wenigstens eine derart ausgebildete Wärmetauscheinrichtung ist vorzugsweise in einer Anordnung prismatischer galvanischer Zellen eingeschoben. Vorzugsweise weist eine derart ausgebildete Wärmetauscheinrichtung wenigstens einen Kanal, insbesondere für ein zweites Temperiermittel auf. Vorzugsweise durchläuft dieses zweite Temperiermittel während des Betriebs der Batterie eine Phasendurchgang. Vorzugsweise wird das zweite Temperiermittel von einer Fördereinrichtung durch den wenigstens einen Kanal der Wärmetauscheinrichtung gefördert. Vorzugsweise ist wenigstens ein Kanal in einer Wärmetauscheinrichtung abgeschlossen und mit einem zweiten Temperiermittel gefüllt, welches innerhalb der Betriebtemperaturen der galvanischen Zellen einen Phasendurchgang durchläuft. Vorzugsweise weist die Wärmetauscheinrichtung weiter wenigstens einen Kühlkörper mit vergrößerter Oberfläche auf. Vorzugsweise ist die Wärmetauscheinrichtung als Wärmerohr ausgebildet. Vorzugsweise ist die Wärmetauscheinrichtung von einem ersten Temperiermittel angeströmt.

Bevorzugt ist vorgesehen, dass eine erfindungsgemäße Lithium-lonen-Batterie für ein Kraftfahrzeug mit einem Elektroantrieb oder einem Hybridantrieb verwendet wird.

Das erfindungsgemäße Verfahren zur Herstellung eines erfindungsgemäßen Elektrodenwickels umfasst die folgenden Schritte:
a) beidseitiges Benetzen oder Tränken dieses (keramischen) Separators mit einer ionischen Flüssigkeit;
b) Anordnen dieses (keramischen) Separators zwischen einer anodischen Elektrode und einer kathodischen Elektrode;
c) Wickeln dieser Anordnung zu einem Elektrodenwickel.

Der Separator ist vor Schritt a) bereitzustellen. Vorzugsweise werden der Separator und die Elektroden vor Schritt b) zugeschnitten. Die Anordnung aus keramischen Separator und Elektroden wird vorzugsweise nach dem Wickeln zum Elektrodenwickel in einer Einhausung aufgenommen werden, um insbesondere das Abfließen oder Ausgasen der ionischen Flüssigkeit zu verhindern. Bevorzugt ist vorgesehen, den benetzten bzw. getränkten keramischen Separator auf eine Elektrode aufzubringen oder aufzulaminieren, wobei der Separator bevorzugt ausgebildet ist, über den Elektrodenrand überzustehen. Die mechanische Verbindung zwischen dem Separator und einer Elektrode basiert auf Adhäsion. Unter Laminieren wird im Sinne der Erfindug ein Zusammenfügen unter Druckaufbringung verstanden. Während des Aufbringens des keramischen Separator werden vorzugsweise chemische Zusatzstoffe zugefügt und/oder Wärme eingebracht. Bevorzugt ist vorgesehen, dass zum Benetzen ionische Flüssigkeiten mit Additiven verwendet werden, welche den keramischen Separator benetzen und ein Verarbeiten unter normalen Klimabedingungen ermöglichen. Insbesondere die aufeinander abgestimmte Kombination aus einem keramischen Separator und einer ionischen Flüssigkeit ermöglicht neue Verarbeitungswege. So sind z.B. eine Inertgas-Umgebung oder eine wasserfreie Umgebung (Luftfeuchte < 2 %), sowie Reinraumbedingungen (Atmosphärenqualität < 30 ppm), wie diese gemäß dem Stand der Technik in Schutzgasboxen bereitgestellt werden müssen, nicht mehr erforderlich. Dadurch kann ein erfindungsgemäßer Elektrodenwickel energiesparend und kostengünstig hergestellt werden. Gemäß einem weiteren Aspekt der Erfindung ist vorgesehen, dass der keramische Separator erst durch Aufbringen einer Benetzungslösung mit etwaigen Additiven, wobei es sich hierbei um insbesondere eine ionische Flüssigkeit handelt, biegsam und damit verarbeitbar wird. Die Benetzungslösung einschließlich der etwaigen Additive wird anschließend nicht entfernt, sondern mit dem Elektrodenwickel verbaut. Das erfindungsgemäße Verfahren lässt sich somit einfach ausführen und ist damit insbesondere auch für die maschinelle Serienfertigung geeignet.

Vorteilhaft wird eine Batterie mit wenigstens zwei galvanischen Zellen und einer Wärmetauscheinrichtung so betrieben, dass die Temperatur der wenigstens einen Wärmetauscheinrichtung in Abhängigkeit von der Temperatur wenigstens einer der beiden galvanischen Zellen eingestellt wird. Vorzugsweise wird die Temperatur der wenigstens einen Wärmetauscheinrichtung in Abhängigkeit von den zulässigen Betriebstemperaturen der wenigstens zwei galvanischen Zellen eingestellt. Bei Unterschreiten einer Minimaltemperatur bzw. wenn sich die Temperatur wenigstens einer galvanischen Zelle dieser Minimaltemperatur nähert, wird die Temperatur der wenigstens einen Wärmetauscheinrichtung oberhalb der Temperatur der galvanischen Zelle eingestellt. So wird vorteilhaft ein Wärmestrom in die galvanische Zelle getrieben. Sofern sich die Temperatur wenigstens einer galvanischen Zelle bzw. eines Elektrodenwinkels einer zulässigen Maximaltemperatur nähert, wird die Temperatur der Wärmetauscheinrichtung vorzugsweise geringer als die Temperatur der wenigstens einen galvanischen Zelle gewählt. So wird der galvanischen Zelle bzw. der Elektrodenwickel Wärmeenergie entzogen.

Vorzugsweise wird die wenigstens eine Wärmetauscheinrichtung dabei von einem ersten Temperiermittel angeströmt und/oder durchströmt. Vorzugsweise dient das Kühlmittel der Kraftfahrzeugklimaanlage als Temperiermittel für die Wärmetauscheinrichtung. Vorzugsweise wird die Temperatur des ersten Temperiermittels in Abhängigkeit von den zulässigen Betriebstemperaturen der wenigstens zwei galvanischen Zellen eingestellt. Bei Unterschreiten einer Minimaltemperatur bzw. wenn sich die Temperatur wenigstens einer galvanischen Zelle dieser Minimaltemperatur nähert, wird die Temperatur des ersten Temperiermittels oberhalb der Temperatur der galvanischen Zelle eingestellt. So wird vorteilhaft ein Wärmestrom in die galvanische Zelle getrieben. Sofern sich die Temperatur einer galvanischen Zelle bzw. eines Elektrodenwinkels einer zulässigen Maximaltemperatur nähert, wird die Temperatur des ersten Temperiermittels vorzugsweise geringer als die Temperatur der wenigstens einen galvanischen Zelle gewählt. So wird der galvanischen Zelle bzw. der Elektrodenwickel Wärmeenergie entzogen.

Vorteilhaft wird der wenigstens eine Wärmeübergangsbereich einer galvanischen Zelle wenigstens zeitweise von einem ersten Temperiermittel angeströmt und/oder durchströmt. Vorzugsweise dient die Umgebungsluft und/oder das erste Temperiermittel der Klimaanlage des Kraftfahrzeugs zur Anströmung bzw. Durchströmung des Wärmeübergangsbereichs. Vorzugsweise wird die Temperatur wenigstens einen Wärmeübergangsbereichs in Abhängigkeit von den zulässigen Betriebstemperaturen der wenigstens zwei galvanischen Zellen eingestellt. Bei Unterschreiten einer Minimaltemperatur bzw. wenn sich die Temperatur wenigstens einer galvanischen Zelle dieser Minimaltemperatur nähert, wird die Temperatur des wenigstens einen Wärmeübergangsbereichs oberhalb der Temperatur der galvanischen Zelle eingestellt. So wird vorteilhaft ein Wärmestrom in die galvanische Zelle getrieben. Sofern sich die Temperatur einer galvanischen Zelle bzw. eines Elektrodenwinkels einer zulässigen Maximaltemperatur nähert, wird die Temperatur des wenigstens einen Wärmeübergangsbereichs vorzugsweise geringer als die Temperatur der wenigstens einen galvanischen Zelle gewählt. So wird der galvanischen Zelle bzw. der Elektrodenwickel Wärmeenergie entzogen.

Weitere Vorteile, Merkmale und Anwendungsmöglichkeiten der vorliegenden Erfindung ergeben sich aus der nachfolgenden beispielhaften Beschreibung eines Ausführungsbeispieles in Zusammenhang mit den Figuren. Es zeigen:
- Fig.1: einen erfindungsgemäßen Elektrodenwickel in einer perspektivischen An- sicht,
- Fig.2: eine erfindungsgemäße galvanische Zelle mit mehreren erfindungsge- mäßen Elektrodenwickein in einer gemeinsamen Einhausung, in einem schematischen Teilschnitt,
- Fig.3: eine schematische Darstellung einer teilgeschnittenen Einhausung für eine erfindungsgemäße galvanische Zelle,
- Fig.4: eine Anordnung mehrerer erfindungsgemäßer galvanischer Zellen mit einer Wärmetauscheinrichtung in einer schematischen Darstellung,
- Fig.5: eine weitere Anordnung mehrerer erfindungsgemäßer galvanischer Zel- len mit einer Wärmetauscheinrichtung in einer schematischen Darstel- lung,
- Fig.6: eine weitere Anordnung mehrerer erfindungsgemäßer galvanischer Zel- len mit einer Wärmetauscheinrichtung in einer schematischen Darstel- lung.

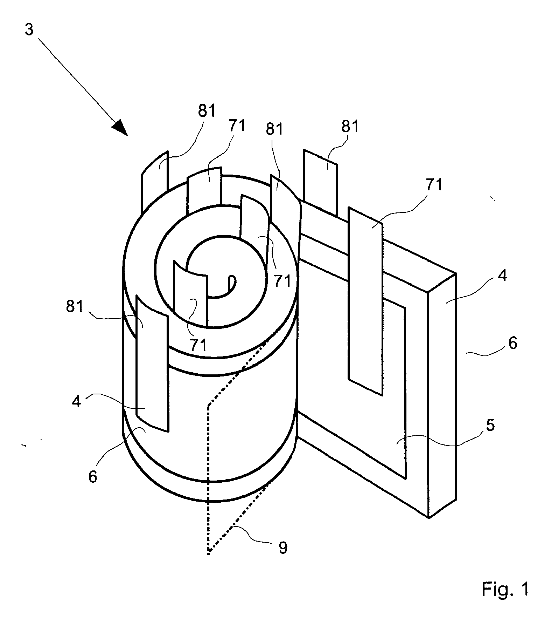

Figur 1 zeigt einen erfindungsgemäßen Elektrodenwickel 3 in einer perspektivischen Ansicht. Dargestellt ist der Elektrodenwickel 3 bevor das Wickeln vollständig abgeschlossen ist.

Der Elektrodenwickel 3 beinhaltet einen keramischen Separator 4, eine anodische Elektrode 5 und eine kathodische Elektrode 6. Der Separator 4 ist derart ausgebildet, dass er über den Außenrand bzw. die Außenumrisslinie der Elektroden 5 und 6 übersteht, wodurch insbesondere die chemische und elektrische Stabilität des Elektrodenwickels 3 verbessert wird. Insbesondere zwischen dem Separator 4 und den beidseitig angeordneten Elektroden 5 und 6 befindet sich eine ionische Flüssigkeit.

Die Elektroden 5 und 6 weisen Kontaktelemente bzw. Ableiterfähnchen 71 und 81 auf, die mit einer nicht dargestellten Poldurchführung elektrisch leitend verbunden sind. Zur Verbesserung der Stromeinbringung und der Stromausbringung aus dem Elektrodenwickel 3 sind eine Vielzahl von Kontaktelementen 71 und 81 vorgesehen, die stirnseitig aus dem Elektrodenwickel herausragen. Auf diese Weise lassen sich in dem Elektrodenwickel 3 auch mehrere Elektrodenschichten anordnen bzw. unterbringen. Hierbei wird bewusst in Kauf genommen, dass durch diese Vielzahl an Kontaktelementen 71 und 81 die Herstellung eines solchen Elektrodenwickels 3 erschwert wird. Die Kontaktelemente 71 und 81 sind hier an einer Stirnseite des Elektrodenwickels 3 angeordnet.

Der Elektrodenwickel 3 ist in einer nicht dargestellten Einhausung bzw. einem Gehäuse aufgenommen. Die Kontaktierung nach außen erfolgt insbesondere mittels wenigstens einer Poldurchführung.

Dessen ungeachtet kann die Batteriezelle 3 auch in einer separaten Umhüllung (nicht dargestellt) angeordnet sein. Durch eine solche Umhüllung kann insbesondere auch verhindert werden, dass die auf den gegenüberliegenden Seiten des Separators 4 angeordneten Elektroden 5 und 6 in der Wickelandordnung miteinander in elektrischen Kontakt geraten. Zur Verhinderung eines solchen elektrischen Kontakts kann alternativ und/oder ergänzend auch eine Isolierschicht 9 in die Wickelanordnung mit eingewickelt werden, was in der Figur gestrichelt dargestellt ist. Eine solche Isolierschicht ist bevorzugt ebenfalls aus einem keramischen Material gebildet, kann jedoch auch aus einem anderen, thermisch stabilen und elektrisch nicht leitenden Material gebildet sein.

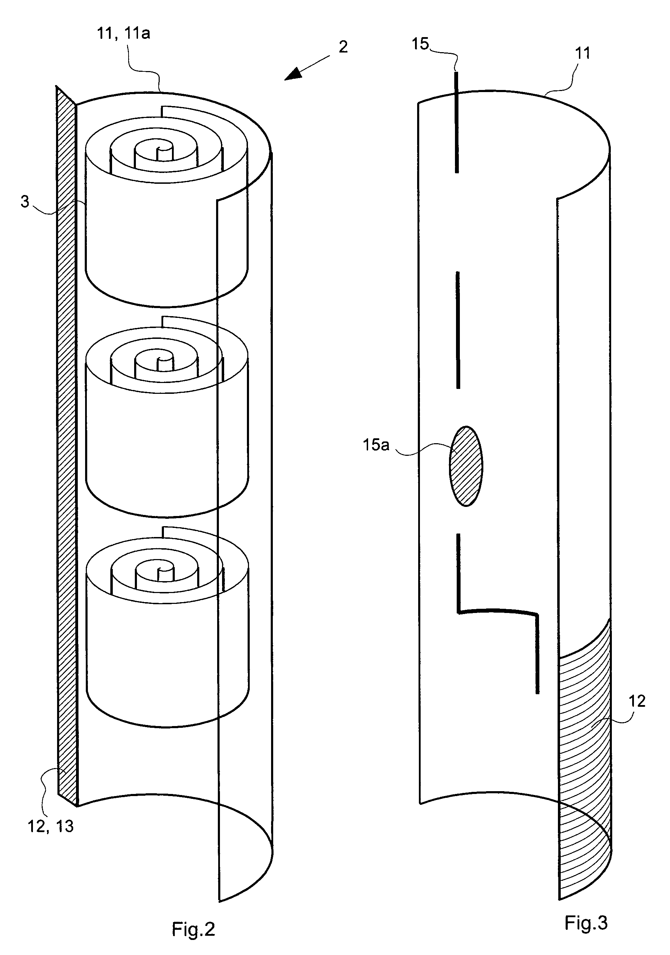

Figur 2 zeigt schematisch eine galvanische Zelle 2 mit mehreren Elektrodenwickeln 3, welche in einer gemeinsamen Einhausung 11 angeordnet sind. Nicht dargestellt sind die Kontaktierungen an den Begrenzungsflächen der Elektrodenwickel, mehrere Stromleiteinrichtungen 15 auf der Innenseite innerhalb der Einhausung 11 sowie die Polkontakte der galvanischen Zelle 2. Auch nicht dargestellt sind zweite Formteile 11 b zum Verschließen der Einhausung bzw. des ersten Formteils 11 a. Die Elektrodenwickel 3 sind in Reihe geschaltet. Das erste Formteil 11 a ist als an die Gestalt der Elektrodenwickel 3 angepasstes Metallblech ausgebildet. Die Innenseite des Formteils 11a ist bereichsweise wärmeleitend und gleichzeitig elektrisch isolierend beschichtet. Die Einhausung 11 bzw. das erste Formteil 11a weisen einen Wärmeübergangsbereich 12 auf, weicher gleichzeitig als Verbindungsbereich 13 dient. Je nach Betriebsart ist der Wärmeübergangsbereich 12 von einem ersten Temperiermittel umströmt oder ist mit einer Wärmetauscheinrichtung verbunden.

Figur 3 zeigt einen Abschnitt einer Einhausung 11 für eine galvanische Zelle. Die Einhausung 11 ist als Verbundfolie ausgebildet. Diese Verbundfolie umschließt die nicht dargestellten Elektrodenwickel unter Vorspannung, so dass die Einhausung 11 eine Kraft auf die Elektrodenwickel ausübt. Diese Kraft zwängt die Elektrodenwickel zusammen und aneinander. Auf der Innenseite der Einhausung 11 sind mehrere Stromleiteinrichtungen 15, 15a aufgebracht. Die Stromleiteinrichtung 15 ist als Stromleitband ausgebildet und durch die Wandungen der Einhausung 11 geführt. Die Stromleiteinrichtung 15 dient auch der Kontaktierung der galvanischen Zelle von außen und der Kontaktierung eines Elektrodenwickels. Die Stromleiteinrichtung 15a ist als metallisches Plättchen ausgebildet, welches mit der Innenseite der Einhausung 11 verbunden ist. Vorzugsweise ist die Stormleiteinrichtung 15a sowohl von der Innenseite der Einhausung 11 als auch von außen elektrisch kontaktierbar. Vorteilhaft kann so auf eine Poldurchführung bzw. einen Polkontakt für die galvanische Zelle verzichtet werden. Dabei ist die Stromleiteinrichtung 15a gasdicht in die Verbundfolie der Einhausung 11 eingebettet. Die Einhausung 11 weist einen Wärmeübergangsbereich 12 auf.

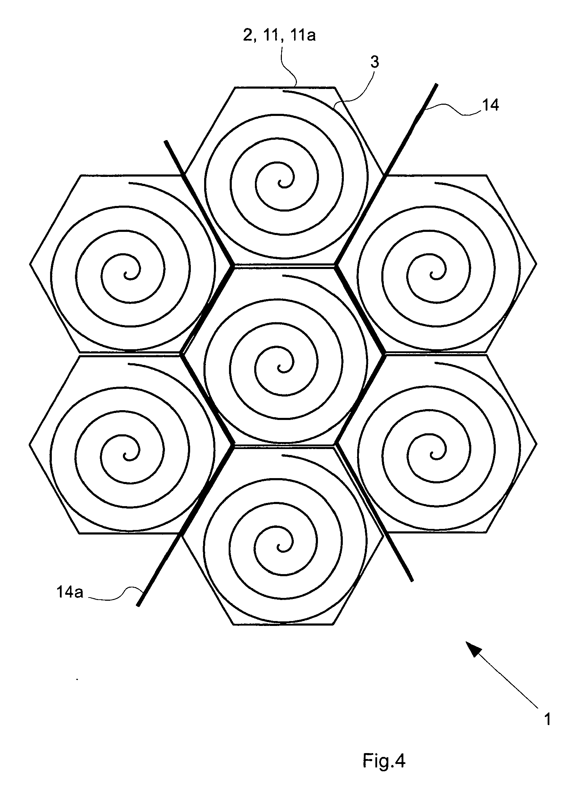

Figur 4 zeigt eine Batterie 1 im Schnitt. Die dargestellte Batterie 1 weist sieben galvanische Zellen 2 auf. Deren Einhausungen 11 sind im Wesentlichen prismatisch ausgebildet und weisen eine sechseckige Grundfläche auf. Die Einhausung 11 bzw. das erste Formteil 11 a ist aus einem Metallblech ausgebildet, welches auf der Innenseite bereichsweise elektrisch isolierend und wärmeleitend beschichtet ist. Die Einhausung 11 umschließt den Elektrodenwickel 3 derart, dass die Einhausung 11 eine Kraft auf die Elektrodenwickel 3 ausübt. Es ist nicht dargestellt, dass eine galvanische Zelle 2 vier Elektrodenwickel enthält, welche in Reihe geschaltet sind. Die Batterie 1 ist weiter mit zwei Wärmetauscheinrichtungen 14, 14a ausgestattet. Die Abstände der Längsachsen der einzelnen galvanischen Zellen sind so bemessen, dass die galvanischen Zellen Kräfte auf die Wärmetauscheinrichtungen 14, 14a ausüben. Es ist nicht dargestellt, dass die Wärmetauscheinrichtungen 14, 14a von einem Temperiermittel angeströmt werden. Es ist nicht dargestellt, dass die ersten Formteile 11 a von angepassten und als Deckel ausgebildeten zweiten Formteilen verschlossen sind. Die Wärmetauscheinrichtungen 14, 14a sind mehrfach gekantet, um insbesondere eine raumsparende Anordnung der galvanischen Zellen 2 zu ermöglichen und die galvanischen Zellen 2 großflächig wärmeleitend zu berühren.

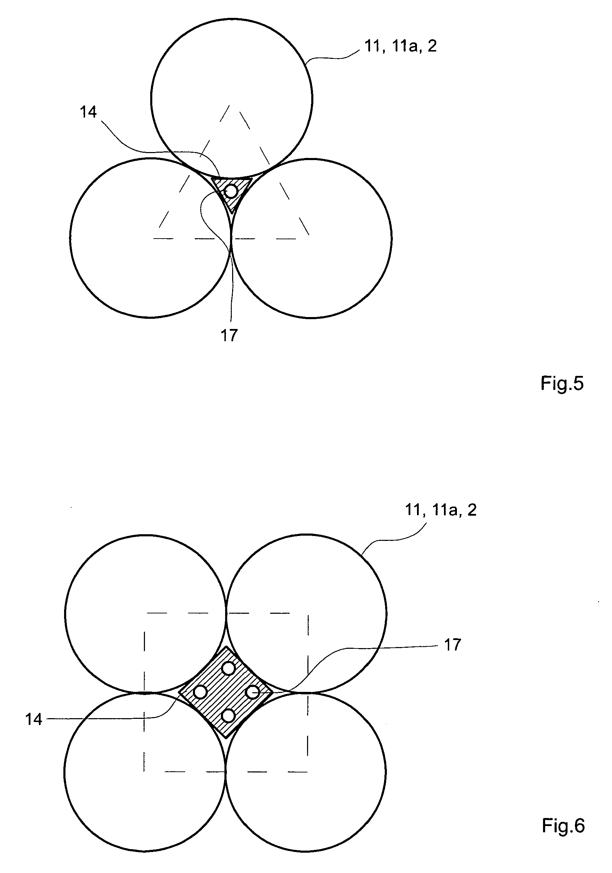

Figur 5 zeigt eine Anordnung von drei galvanischen Zellen mit vorgegebenen Abständen zwischen deren Längsachsen. Gestrichelt ist die Elementarzelle der Anordnung dargestellt, welche die Gestalt eines gleichseitigen Dreiecks hat. Der Freiraum zwischen den galvanischen Zellen 2 ist mit einer Wärmetauscheinrichtung 14 gefüllt. Die Wärmetauscheinrichtung 14 weist einen Kanal 17 für ein Temperiermittel auf. Es ist nicht dargestellt, dass die Wärmetauscheinrichtung 14 an die Gestalt der umgebenen galvanischen Zellen 2 angepasst ist. So schmiegt sich die Wärmetauscheinrichtung 14 mit möglichst großen Flächen an die galvanischen Zellen 2 an. Die Wärmetauscheinrichtung 14 weist einen Kanal 17 für ein zweites Temperiermittel auf. Das zweite Temperiermittel wird von einer der Batterie 1 zugeordneten Fördereinrichtung durch die Kanäle 17 befördert. Das zweite Temperiermittel ist so gewählt, dass es bei einer Temperatur von drei Kelvin unterhalb der maximal zulässigen Betriebstemperatur der galvanischen Zelle einen Phasenübergang durchläuft.

Figur 6 zeigt ebenfalls eine Anordnung mehrerer galvanischer Zellen 2, um eine gemeinsame Wärmetauscheinrichtung 14. Diese Wärmetauscheinrichtung 14 schmiegt sich mit möglichst großen Flächen an die sie umgebenden galvanischen Zellen 2 an. Die Wärmetauscheinrichtung 14 weist mehrere Kanäle 17 auf, welche vorgesehen sind, mit einem zweiten Temperiermittel gefüllt zu werden. Nicht dargestellt ist, dass die Kanäle 17 abgeschlossen sind und an ihren Enden einen Kühlkörper mit vergrößerter Oberfläche aufweisen. Die Wärmetauscheinrichtung 14 wirkt gemeinsam mit dem oberflächenvergrößerten Kühlkörper und dem zweiten Temperiermittel mit Fähigkeit zur Phasenänderung als Wärmerohr. Dafür ist erforderlich, dass die Temperatur eines Phasendurchgangs des zweiten Temperiermittels an die Betriebstemperaturen der galvanischen Zellen angepasst ist. Das zweite Temperiermittel ist so gewählt, dass eine Phasenänderungstemperatur fünf Kelvin unterhalb der maximal zulässigen Betriebstemperatur der galvanischen Zellen 2 bzw. der Elektrodenwickei liegt. In der Figur ist gestrichelt die quadratische Elementarzelle der Anordnung der Längsachsen der galvanischen Zellen 2 dargestellt. Im Vergleich zu Figur 5 ist die Volumenausnutzung zwar etwas verschlechtert, andererseits ist die Wärmetauscheinrichtung 14 mit größeren Oberflächen und zusätzlichen Kanälen 17 ausgebildet.

## Patentansprüche

1. Elektrodenwickel (3) von im wesentlichen zylindrischer Gestalt, welcher wenigstens aufweist:
eine anodische Elektrode (5),
eine kathodische Elektrode (6), und
einen Separator (4), welcher wenigstens teilweise zwischen diesen Elektroden (5, 6) angeordnet ist,
**dadurch gekennzeichnet,**
**dass** der Separator (4) aus einem Material gefertigt ist, welches wenigstens einen Bestandteil aus einem keramischen Werkstoff aufweist.

2. Elektrodenwickel (3) nach Anspruch 1, **dadurch gekennzeichnet, dass** der Separator (4) aus einem biegsamen keramischen Kompositmaterial gebildet ist und/oder dass der Separator (4) wenigstens einseitig und bevorzugt zweiseitig mit einer ionischen Flüssigkeit benetzt ist.

3. Elektrodenwickel (3) nach mindestens einem der vorausgehenden Ansprüche, **dadurch gekennzeichnet, dass** der Separator (4) zumindest an einer Stirnfläche des Elektrodenwickels (3) über die Elektroden (5, 6) hinausragt.

4. Elektrodenwickel (3) nach mindestens einem der vorausgehenden Ansprüche, **dadurch gekennzeichnet, dass** der Elektrodenwickel (3) wenigstens zwei Paare von Elektroden (5, 6) unterschiedlicher Polarität aufweist, welche insbesondere in Reihe geschaltet sind.

5. Elektrodenwickel (3) nach mindestens einem der vorausgehenden Ansprüche, **dadurch gekennzeichnet, dass** an wenigstens einer Begrenzungsfläche des Elektrodenwickels (3) wenigstens ein Kontaktelement (71, 81) angeordnet ist, vorzugsweise an einer Stirnfläche des Elektrodenwickels (3).

6. Elektrodenwickel (3) nach mindestens einem der vorausgehenden Ansprüche, **dadurch gekennzeichnet, dass** der Separator (4) bevorzugt aus einem stoffdurchlässigen Träger besteht, vorzugsweise teilweise stoffdurchlässig, also im Wesentlichen durchlässig in Bezug auf zumindest ein Material und im Wesentlichen undurchlässig in Bezug auf zumindest ein anderes Material,
wobei der Träger auf mindestens einer Seite mit einem anorganischen Material beschichtet ist,
wobei als stoffdurchlässiger Träger vorzugsweise ein organisches Material verwendet wird, welches vorzugsweise als nicht verwebtes Vlies ausgestaltet ist,
wobei das organische Material vorzugsweise ein Polymer und besonders bevorzugt Polyethylenterephthalat (PET) aufweist,
wobei das organische Material mit einem anorganischen ionenleitenden Material beschichtet ist, welches vorzugsweise in einem Temperaturbereich von - 40° C bis 200° C ionenleitend ist,
wobei das anorganische, ionenleitende Material bevorzugt wenigstens eine Verbindung aus der Gruppe der Oxide, Phosphate, Sulfate, Titanate, Silikate, Aluminosolikate wenigstens eines der Elemente Zr, Al, Li ist, insbesondere Zirkonoxid,
und wobei das anorganische, ionenleitende Material bevorzugt Partikel mit einem größten Durchmesser unter 100 nm aufweist.

7. Elektrodenwickel (3) nach einem der vorhergehenden Ansprüche,
**dadurch gekennzeichnet, dass** er wenigstens eine Elektrode (5, 6) umfasst, vorzugsweise wenigstens eine Kathode (6), welche eine Verbindung mit der Formel LiMPO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist; und/oder dass er wenigstens eine Elektrode (5, 6) umfasst, vorzugsweise wenigstens eine Kathode (6), welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

8. Galvanische Zelle (2) mit wenigstens einem Elektrodenwickel (3) gemäß mindestens einem der Ansprüche 1 bis 7, **dadurch gekennzeichnet, dass** der wenigstens eine Elektrodenwickel (3) wenigstens teilweise von einer Einhausung (11) umgeben ist.

9. Galvanische Zelle (2) mit wenigstens zwei Elektrodenwickein (3) gemäß mindestens einem der Ansprüche 1 bis 7, **dadurch gekennzeichnet, dass** die wenigstens zwei Elektrodenwickel (3) miteinander elektrisch verschaltet sind,
dass die Längsachsen der wenigstens zwei Elektrodenwickel (3) im Wesentlichen parallel zueinander angeordnet sind,
und dass die wenigstens zwei Elektrodenwickel (3) wenigstens teilweise von einer gemeinsamen Einhausung (11) umgeben sind, wobei vorzugsweise der Innenseite der Einhausung (11) wenigstens eine Stromleiteinrichtung (15, 15a) zugeordnet ist.

10. Galvanische Zelle (2) gemäß Anspruch 8 oder 9, **dadurch gekennzeichnet, dass** wenigstens ein Kontaktelement (71, 81) eines Elektrodenwickels (3) mit der Einhausung (11) insbesondere elektrisch leitend verbunden ist, und/oder dass wenigstens ein Kontaktelement (71, 81) eines Elektrodenwickels (3) aus der Einhausung (11) herausgeführt ist.

11. Galvanische Zelle (2) gemäß mindestens einem der Ansprüche 8 bis 10, **dadurch gekennzeichnet, dass** die Einhausung (11) wenigstens einen ersten Verbindungsbereich (13) und/oder wenigstens einen Wärmeübergangsbereich (12) aufweist, und/oder dass die Einhausung (11) wenigstens ein erstes Formteil (11a) und ein zweites Formteil (11 b) aufweist, welche vorgesehen sind, miteinander verbunden zu werden.

12. Batterie (1) mit wenigstens zwei galvanischen Zellen (2) gemäß mindestens einem der Ansprüche 8 bis 11, **dadurch gekennzeichnet, dass** der Batterie (1) wenigstens eine Wärmetauscheinrichtung (14, 14a) zugeordnet ist, welche vorgesehen ist, bei vorgegebenen Bedingungen Wärmeenergie mit wenigstens einer der wenigstens zwei galvanischen Zellen (2) auszutauschen, wobei vorzugsweise die Längsachsen der wenigstens zwei galvanischen Zellen (2) voneinander einen vorbestimmten Abstand aufweisen.

13. Verwendung einer galvanischen Zelle (2) gemäß mindestens einem der vorausgehenden Ansprüche 8 bis 11 für ein Kraftfahrzeug mit einem Elektroantrieb oder einem Hybridantrieb.

14. Verfahren zur Herstellung eines Elektrodenwickels (3) gemäß mindestens einem der Ansprüche 1 bis 7, umfassend die folgenden Schritte:
a) beidseitiges Benetzen oder Tränken eines Separators (4) mit einer ionischen Flüssigkeit;
b) Anordnen des Separators (4) zwischen einer anodischen Elektrode (5) und wenigstens einer kathodischen Elektrode (6)
c) Wickeln dieser Anordnung zu einem Elektrodenwickel (3).

15. Verfahren zum Betrieb einer Batterie (1) mit wenigstens zwei galvanischen Zellen (2) insbesondere gemäß mindestens einem der Ansprüche 8 bis 11 und wenigstens einer Wärmetauscheinrichtung (14, 14a), **dadurch gekennzeichnet, dass** die Temperatur der wenigstens einen Wärmetauscheinrichtung (14, 14a) in Abhängigkeit von der Temperatur wenigstens einer der beiden galvanischen Zellen (2) eingestellt wird, wobei vorzugsweise die Wärmetauscheinrichtung (14, 14a) wenigstens zeitweise von einem ersten Temperiermittel angeströmt und/oder durchströmt wird, wobei die Temperatur des ersten Temperiermittels in Abhängigkeit von der Temperatur wenigstens einer der beiden galvanischen Zellen (2) eingestellt wird.

16. Verfahren zum Betrieb einer galvanischen Zelle (2) gemäß Anspruch 11, **dadurch gekennzeichnet, dass** wenigstens ein Wärmeübergangsbereich (12) wenigstens zeitweise von einem ersten Temperiermittel angeströmt und/oder durchströmt wird.
